# EUROPÄISCHE PATENTSCHRIFT

(11) **EP 0 900 610 B1**
(45) Veröffentlichungstag und Bekanntmachung des Hinweises auf die Patenterteilung: **26.03.2003**
(21) Anmeldenummer: 98116659.8
(22) Anmeldetag: 03.09.1998
(51) Int. Cl.: B22F 3/11, B22F 3/24, F16C 33/12

(54) **Verfahren zur Herstellung eines Gleitlagers aus gesintertem Metall für Keramikwellen und Gleitlager**
Process for preparing a bearing of sintered metal for ceramic shafts and bearing produced thereby
Procédé de préparation de palier en métal fritté pour arbre céramique ainsi que palier obtenu

(30) Priorität: 05.09.1997 DE 19738919
(43) Veröffentlichungstag der Anmeldung: 10.03.1999
(73) Patentinhaber: Maxon-Motor GmbH, 79350 Sexau (DE)
(72) Erfinder: Fütterer, Bodo, 6005 Luzern (CH)
(74) Vertreter: Grünecker, Kinkeldey, Stockmair & Schwanhäusser Anwaltssozietät

(56) Entgegenhaltungen:
- EP-A- 0 049 373
- EP-A- 0 926 327
- GB-A- 2 220 420
- US-A- 3 232 754
- Schatt, W., Pulvermetallurgie Sinter- und Verbundwekstoffe, VEB Verlag, 1979, S. 284-291, 300,301

## Beschreibung

Die Erfindung betrifft ein Verfahren zur Herstellung eines Gleitlagers aus einem härtbarem Sintermetall, das gesintert wird, bis ein offenes Porenvolumen von zumindest 15 % erreicht wird, um ein Gleitlager zu bilden, das nach dem Sintern kalibriert wird und dessen Poren unter Vakuum mit Öl gefüllt werden.

Ein derartiges Verfahren zur Herstellung eines Sinterlagers aus Aluminium ist beispielsweise aus der US 3 232 754 A bekannt. Aluminiumlager weisen eine hohe Wärmeleitfähigkeit auf. Außerdem hat Aluminium einen niedrigen E-Modul, so dass die Lager lokalen Druckspitzen nachgeben. Weiter ist laut Beschreibungseinleitung auch die Verwendung von Legierungen auf Magnesium- oder Titan-Basis möglich.

Zunächst wird ein Grünling aus dem Aluminiumpulver gepresst. Anschließend wird der Grünling gesintert und dann mit Öl imprägniert und kalibriert. Die Imprägnierung mit Öl findet unter Vakuum statt und kann vor oder nach dem Kalibrieren erfolgen.

Der Nachteil der Aluminiumsinterlager, wie sie gemäß dem in der US 3 232 754 A gezeigten Verfahren hergestellt sind, liegt zum einen darin, dass die Laufflächen der Aluminiumsinterlager leicht verschleißen. Außerdem ist das in der US 3 232 754 A gezeigte Verfahren nur bei Sinterlagern aus Aluminium anwendbar. Aufgrund des schnellen Verschleißes müssen die Lager bald ausgewechselt werden, da die Maßhaltigkeit nach nur kurzer Betriebsdauer nicht mehr gewährleistet ist Außerdem können aufgrund des Härteunterschiedes Aluminiumsinterlager nicht mit Keramikwellen gepaart werden.

Aus der industriellen Praxis sind Verfahren zur Herstellung von Gleitlagern der eingangs genannten Art bekannt. Dabei ist das Gleitlager aus Sinterbronze bzw. Sintereisen gefertigt und der Porenanteil dieses Sinterlagers beträgt maximal 30%. Ein solcher Porenanteil ist notwendig, um gute Schmiereigenschaften des Lagers mit ausreichender Festigkeit zu verbinden. Überlicherweise wird das Sinterlager unter Unterdruck bzw. Vakuum mit Öl getränkt, so dass sich das Schmiermittel im Porenraum anlagert. Damit das Schmiermittel auch im inneren Bereich des Sinterlagers angelagert wird, sind offene Poren notwendig.

Der Nachteil dieser bekannten Gleitlager ist in erster Linie ein schlechtes Laufverhalten bei niedrigen Umfangsgeschwindigkeiten der Welle und/oder bei großen, an der Welle angreifenden Querkräften.

Sinkt nämlich die Umfangsgeschwindigkeit der Welle bei konstanter Querkraft unter einen bestimmten Wert ab bzw. steigt die an der Welle angreifende Querkraft bei konstanter Umfangsgeschwindigkeit über einen bestimmten Wert, dann wird im Lagerspalt zwischen Welle und Lager nicht mehr genügend Druck aufgebaut, um einen hydrodynamischen Tragvorgang zu bewirken, bei dem die Welle auf einem Schmiermittelfilm aufschwimmt.

Bei genügend hohen Umfangsgeschwindigkeiten bzw. genügend niedrigen Querkräften schwimmt die Welle auf besagtem Schmiermittel auf und die Lagerreibung wird allein von der Flüssigkeitsreibung bestimmt.

Bei niedrigen Umfangsgeschwindigkeiten herrscht zwischen Welle und Lager Mischreibung, bei der neben der Flüssigkeitsreibung auch noch Festkörperkontakt zwischen Welle und Lager herrscht. Dieses Gebiet der Mischreibung ist mit erhöhtem Verschleiß und erhöhter Wärmeentwicklung durch erhöhte Reibung im Lager verbunden.

Durch eine hohe Querbelastung der Welle, wie sie gerade bei Motorantrieben auftritt, wird das Gebiet der Mischreibung zu höheren Drehzahlen hin verschoben; ein direkter Kontakt zwischen Welle und Lager findet bereits bei hohen Drehzahlen statt.

Die obengenannte, in der industriellen Praxis gängige Gleitlagertechnik hat nun den Nachteil, dass sie im Gebiet der Mischreibung versagt, wo die Wärmeentwicklung durch die hohe Festkörperreibung so groß ist und so hohe lokale Temperaturen im Lager auftreten, dass sich das Schmiermittel zersetzt und das Sinterlager verschleißt; die Welle "frisst" sich im Lager fest.

Aus der EP 0 428 539 B1 ist es daher bekannt, das Sinterbronzelager durch ein Metall-Keramik-Sintergemisch zu ersetzen, da zum einen die Materialpaarung Keramik-Keramik für Lager und Welle sehr niedrige Gleitreibungskoeffizienten und hohe Temperaturfestigkeit im Bereich der Mischreibung aufweist und andererseits das Metall eine gute Wärmeleitfähigkeit besitzt.

Nun hat sich allerdings gezeigt, dass im Bereich der Mischreibung bei hohen Querkräften bei einem Lager aus Metall-Keramik-Sintergemisch und einer Keramikwelle nach wie vor lokal ein Zersetzen des Öles durch Verkoksen stattfindet.

Aus diesem Grund wurden bislang im Gebiet der Mischreibung oder bei instationär betriebenen Wellen ausschließlich Kugellager verwendet. Bei Elektrokleinstmotoren und deren Antriebswellen allerdings liegen Baugröße und Preis der verfügbaren Kleinstkugellager im Bereich des Elektromotors.

Die Aufgabe der Erfindung ist es daher, die bekannten Gleitlager dahingehend zu verbessern, dass im Bereich der Mischreibung bei hohen Querkräften ein lokaler Verschleiß von Welle und Lager vermieden oder zumindest erheblich gesenkt wird.

Erfindungsgemäß wird die Aufgabe u.A. dadurch gelöst, dass als Sintermetall ein Sinterstahl verwendet wird, der zur Bildung eines Gleitlagers eines Elektrokleinstmotors vor dem Sintern in eine vorbestimmte Form gebracht und nach dem Sintern gehärtet wird und dass das Gleitlager mit einer Keramikwelle kombiniert wird.

Die Erfindung ist in den Ansprüchen 1 und 7 definiert.

Die erfindungsgemäße Lösung hat den überraschenden Vorteil, dass gehärtete Sinterlager mit einem Mindestporenvolumen von 15 % im Bereich der Mischreibung, im Zusammenspiel mit Keramikwellen, so gut wie keinen Verschleiß aufweisen. Dadurch sind die erfindungsgemäßen Gleitlagersystem über einen weiten Drehzahlbereich und bei hoher Querlast bis in den Bereich der Mischreibung einsetzbar. Die Temperatur des Lagers bleibt auch im Bereich der Mischreibung so niedrig, dass eine Zersetzung des Schmiermittels nicht stattfindet. Auch ein bei Festkörperkontakt entstehender, lokaler Funkenschlag mit daraus resultierender teilweiser Verbrennung von Lagermaterial und Schmierstoff, wie von den Keramiklagem her bekannt, tritt bei den erfindungsgemäßen Lagern nicht mehr auf.

Sinterstahl hat den Vorteil; dass es besonders kostengünstig ist und sehr einfach wärmezubehandeln, d.h. zu härten und anzulassen ist. Mit Sinterstahl lassen sich auch Oberflächenbehandlungen wie Nitrieren, Borieren, Carbonitrieren, Einsatz- und Randschichthärten durchführen.

Obwohl die Härte des erfindungsgemäßen Lagers gegenüber Keramiklagern reduziert ist, tritt bei den erfindungsgemäßen, gehärteten Lagern trotz des gegenüber den bekannten Lagern geringeren Härteunterschieds zur Welle wider Erwarten im Bereich der Mischreibung fast kein Verschleiß auf.

In einer besonders vorteilhaften Ausgestaltung kann das Gleitlager nach dem Härten angelassen werden, um die Spröde des Gleitlagers zu verringern.

Da das Sintermaterial nach dem Sintern und vor dem Härten leicht zu kalibrieren ist, ist es weiterhin vorteilhaft, wenn die Lauffläche vor dem Härten kalibriert werden kann. Allerdings kann auch vorgesehen sein, dass die Lauffläche nach dem Härten kalibriert wird. Durch die Kalibration nach dem Härten wird die Maßhaltigkeit des Gleitlagers erhöht, da die Gefügeänderungen durch die Wärmebehandlung die Abmaße des Gleitlagers so nicht mehr beeinflussen können.

Eine im Gebiet der Mischreibung besonders verschleißarme Welle-Lager-Kombination wird erreicht, wenn man das Gleitlagersystem derart ausbildet, dass neben dem erfindungsgemäßen Lager die Welle ebenfalls aus Sintermaterial ist.

In einer weiteren Ausgestaltung käme als Material auch Zirkoniumoxid in Frage.Zirkoniumoxid weist eine sehr große Härte auf, so dass die Welle eine größere Oberflächenhärte als das Lager besitzt. Eine härtere Welle hat sich in der Gleitlagertechnik als die in puncto Verschleißsicherheit beste Lösung ergeben.

Im folgenden wird die Erfindung anhand von Zeichnungen näher erläutert.

Es zeigen:
- Fig. 1: eine Welle und ein Gleitlager im Querschnitt bei hoher Drehzahl während des hydrodynamischen Tragvorganges unter Querkrafteinfluß,
- Fig. 2: eine schematische Detailansicht des Sintergefüges von Welle und Gleitlager im Querschnitt während des hydrodynamischen Tragvorganges von Fig. 1,
- Fig. 3: eine Welle und ein Gleitlager im Querschnitt bei niedriger Drehzahl bei Mischreibung unter Querkrafteinfluß,
- Fig. 4: eine schematische Detailansicht des Sintergefüges von Welle und Gleitlager einer bekannten Keramik-Keramikmaterialpaarung im Querschnitt,
- Fig. 5: eine schematische Detailansicht des Sintergefügtes von Welle und Gleitlager einer erfindungsgemäßen Materialpaarung im Querschnitt.

Im folgenden wird der Aufbau der Erfindung geschildert.

Zur Herstellung des beispielhaft beschriebenen Lagers wird Sinterstahlpulver mit einer Korngröße von ca. 150 µm in eine dem Gleitlager entsprechende Form gepreßt. Dabei kann die Formgebung durch Kaltpressen, Heißpressen sowie durch einfaches Schütten, Drucksinterverfahren sowie durch Explosionsverdichten stattfinden. Durch Hinzufügen weiterer Metallpulver, beispielsweise Nickel, kann eine erhöhte Warmfestigkeit bei exakt reproduzierbaren Mischungsverhältnissen erreicht werden.

Der Sintervorgang läuft im wesentlichen so ab, wie bei herkömmlichen Sinterlagern aus Bronze.

Anschließend wird die Lagerbohrung das aus der Form genommenen Lagers, wie bei herkömmlichen Sinterlagern auch, kalibriert, indem durch Lagerbohrung ein entsprechender Kalibrierdom gezogen wird.

Anschließend wird das Lager gehärtet und angelassen.

Bei besonders beanspruchten Lagern kann nun noch eine Oberflächenbehandlung wie Nitrieren, Carbonieren, Carbonitrieren, Borieren, Randschicht- oder Einsatzhärten erfolgen.

Nun wird das Lager im Vakuum mit Öl getränkt, so daß in den Poren des Lagers Öl gespeichert wird.

Damit das Lager genügend Schmiermittel aufnehmen kann, ist bei der Formgebung und dem Sintern darauf zu achten, daß das Gleitlagermaterial nicht zu sehr verdichtet wird. In der Praxis hat sich ein offenes Porenvolumen von 20% als optimal erwiesen. Bei diesem Wert ist der Schmiermittelkreislauf im Lagerbetrieb gewährleistet, ohne daß nenneswerte Festigkeitseinbußen des Lagers auftreten.

Ein derartiges Verfahren ist besonders geeignet zur Herstellung von Gleitlagern für Elektrokleinstmotoren, mit Wellen- bzw. Lagerinnendurchmessern kleiner als 5 mm, oft auch kleiner als 1 mm.

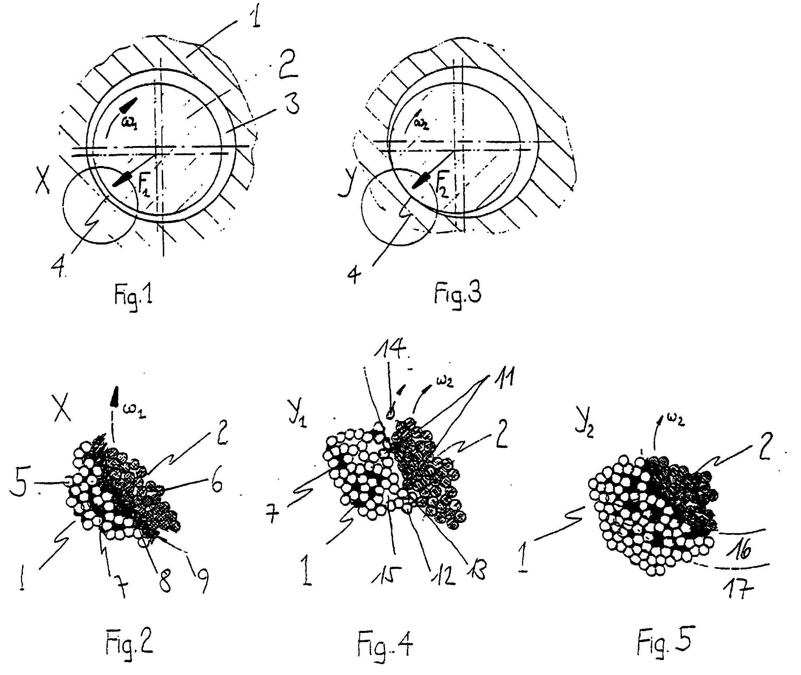

Fig. 1 zeigt ein Lager 1, in dem eine Welle 2 so gelagert ist, daß sich zwischen Lager 1 und Welle 2 ein mit Schmiermittel gefüllter Lagerspalt 3 bildet. Die Welle dreht sich mit einer Winkelgeschwindigkeit ω₁. Außerdem wirkt auf die Welle die Kraft F₁. Durch die Drehbewegung der Welle wird im Lagerspalt 3 Schmiermittel an einer Stelle des Lagerspalts, die in der Kraftangriffsrichtung der Kraft F₁ liegt zwischen Lager 1 und Welle 2 gepumpt, so daß Lager 1 und Welle 2 durch einen Schmierfilm getrennt sind. In diesem Zustand läuft das Lager praktisch verschleißfrei und weist einen geringen Reibungsbeiwert auf, da eine reine Flüssigkeitsreibung vorherrscht.

Fig. 2 zeigt das Detail X aus Fig. 1, wobei die durch den Sinterprozeß miteinander verbundenen, ursprünglich kugelförmigen Sinterkömer 5, 6 des Lagers und der Welle dargestellt sind. Die Hohlräume 7 des Sintergefüges 5 des Lagers 1 sind schmiermittelgetränkt. Im hydrodynamischen Tragzustand hat sich zwischen Lager 2 und Welle 1 ein Schmiermittelfilm 8 gebildet, der durch die Drehbewegung ω₁ der Welle 2 in Pfeilrichtung 9 in den Spalt gepumpt wird, so daß sich die Sintergefüge 5, 6 von Lager 1 und Welle 2 nirgendwo berühren.

Fig. 3 zeigt das Lager aus Fig. 1 im Gebiet der Mischreibung. Gegenüber Fig. 1 ist die Drehzahl auf ω₂<ω₁ verringert und/oder die Querkraft auf F₂>F₁ vergrößert, so daß der durch die Drehbewegung ω₂ der Welle 2 aufgebaute Schmiermitteldruck an der Stelle 4 nicht mehr ausreicht, um Schmiermittel vollständig zwischen Welle 2 und Lager 1 zu pumpen.

Fig. 4 zeigt ein Detail Y₁ des Sintergefüges von Lager 1 und Welle 2 der bekannten Materialpaarung Keramik-Keramik im Gebiet der Mischreibung an einer Stelle mit hoher lokaler Temperatur, die dadurch erzeugt wird, daß an Stellen 11 die Gefüge von Lager 1 und Welle 2 ohne zwischenliegenden Schmierfilm direkt aneinander reiben. Durch dieses Aneinanderreiben und der teilweisen Kollision von Sinterkörnern werden die Sinterkörner 12 unmittelbar an der Kontaktstelle verformt oder gerade im Falle spröder Keramikteilchen brechen, 13, und werden im Lagerspalt mitgespült, 14, wo sie zu weiterem Abrieb führen. Zwar senkt die Temperaturerhöhung im Bereich der Mischreibung die Viskosität des Schmiermittels, so daß Schmiermittel leichter in den Lagerspalt transportiert werden kann, doch kann bei sehr hohen Temperaturen in Gebieten 15, die zu Kontaktstellen 11 angrenzen (über ca. 100°C) eine Zersetzung, Verkoksung oder gar Verdampfung des Schmiermittels auftreten.

Fig. 5 zeigt das erfindungsgemäße Gleitlager mit einem gesinterten Lager 1 aus gehärtetem Sinterstahl und einer gesinterten Keramikwelle aus Zirkoniumoxid. Die Härtung wirkt dabei nur in eine begrenzte Tiefe 16 des Lagers 1. Darunterliegendes Sintermaterial 17 ist nicht gehärtet und bildet damit ein weiches Gefüge. Das offene Porenvolumen beträgt 20 % und die Poren sind mit Schmierstoff gefüllt.

Im folgenden wird die Funktionsweise der Erfindung im Gebiet der Mischreibung geschildert: Durch die höhere Wärmeleitfähigkeit von reinem Metall im Gegensatz zu Metall-Keramik-Paarungen wird die Wärme von den Kontaktstellen schnell wegtransportiert, so daß erst bei viel niedrigeren Drehzahlen bzw. viel höheren Querkräften als bei den bekannten Materialpaarungen die oben bei Fig. 4 beschriebenen Erscheinungen auftreten.

Da das Wellenmaterial mit ca. 2000 bis 2500 HV 30 härter ist als die gehärtete Lagerlauffläche mit 600 bis 700 HV 2, nimmt die Lagerfläche die Hauptverformung bei der Mischreibung auf, ohne daß spröde Zirkoniumoxidteilchen ausbrechen können. Damit läuft das erfindungsgemäße Lagersystem verschleißfreier im Bereich der Mischreibung als bekannte Lager.

## Patentansprüche

1. Gleitlagersystem für Elektrokleinstmotoren, mit einer Keramikwelle und einem Gleitlager aus einem härtbaren Sinterstahl, wobei das Gleitlager ein offenes, ölggetränktes Porenvolumen von mindestens 15 % aufweist, wobei ferner die Lauffläche des Gleitlagers kalibriert, und wobei schließlich das Gleitlager durch Wärmebehandlung gehärtet ist.

2. Gleitlagersystem nach Anspruch 1, **dadurch gekennzeichnet, dass** das Gleitlager nach dem Härten angelassen ist.

3. Gleitlagersystem nach Anspruch 1 oder 2, **dadurch gekennzeichnet, dass** die Welle aus Zirkoniumoxid ist.

4. Gleitlagersystem nach Anspruch 1, **dadurch gekennzeichnet, dass** die Laufflächen von Welle und/ oder Lager oberflächenbehandelt sind.

5. Gleitlagersystem nach einem der oben genannten Ansprüche, **dadurch gekennzeichnet, dass** die Härte der Lauffläche des Gleitlagers nach dem Härten und/ oder Anlassen 600 bis 700 HV 2 beträgt.

6. Gleitlagersystem nach einem der oben genannten Ansprüche, **dadurch gekennzeichnet, dass** die Oberflächenhärte der Welle 2.000 bis 2.500 HV 30 beträgt.

7. Verfahren zum Herstellen eines Gleitlagersystems für Elektrokleinstmotoren umfassend eine Keramikwelle und ein Gleitlager aus einem härtbaren Sinterstahl, der in eine vorbestimmte Form gebracht und gesintert wird, bis ein offenes Porenvolumen von zumindest 15 % erreicht wird, um ein Gleitlager zu bilden, dessen Lauffläche nach dem Sintern kalibriert wird, das durch eine Wärmebehandlung gehärtet und dessen Poren unter Vakuum mit Öl gefüllt werden, und wobei abschließend das Gleitlager mit der Keramikwelle kombiniert wird.

8. Verfahren nach Anspruch 6, **dadurch gekennzeichnet, dass** das Gleitlager nach dem Härten angelassen wird.

## Claims

1. Friction bearing system for miniature electric motors, comprising a ceramic shaft and a friction bearing from a hardenable sintered steel, wherein the friction bearing has an open, oil-infiltrated pore volume of at least 15%, wherein moreover the running surface of the friction bearing is calibrated, and wherein finally the friction bearing is hardened by a thermal treatment.

2. Friction bearing system according to claim1, **characterized in that** the friction bearing is tempered after the hardening.

3. Friction bearing system according to claim 1 or 2, **characterized in that** the shaft is made of zirconium oxide.

4. Friction bearing system according to claim 1, **characterized in that** the running surfaces of the shaft and/or bearing are surface-treated.

5. Friction bearing system according to one of the preceding claims, **characterized in that** the hardness of the running surface of the friction bearing is 600 to 700 HV 2 after the hardening and/or tempering.

6. Friction bearing system according to one of the preceding claims, **characterized in that** the surface hardness of the shaft is 2,000 to 2,500 HV 30.

7. Method for fabricating a friction bearing system for miniature electric motors comprising a ceramic shaft and a friction bearing from a hardenable sintered steel adapted to have a predetermined shape and sintered until an open pore volume of at least 15% is obtained, for forming a friction bearing, whereof the running surface is calibrated after the sintering, which is hardened by a thermal treatment and the pores of which are filled with oil under a vacuum, and wherein finally the friction bearing is combined with the ceramic shaft.

8. Method according to claim 6, **characterized in that** the friction bearing is tempered after the hardening.

## Revendications

1. Système de palier lisse pour moteurs électriques miniatures, avec un arbre en céramique et un palier lisse en un acier fritté apte à être trempé, le palier lisse présentant un volume poreux ouvert, imprégné d'huile, d'au moins 15 %, la surface de roulement du palier lisse étant calibrée et le palier lisse, enfin, étant trempé grâce à un traitement thermique.

2. Système de palier lisse selon la revendication 1, **caractérisé en ce que** le palier lisse, après la trempe, est soumis à un revenu.

3. Système de palier lisse selon la revendication 1 ou 2, **caractérisé en ce que** l'arbre est en oxyde de zirconium.

4. Système de palier lisse selon la revendication 1, **caractérisé en ce que** les surfaces de roulement de l'arbre et/ou du palier subissent un traitement de surface.

5. Système de palier selon l'une des revendications précédentes, **caractérisé en ce que** la dureté de la surface de roulement du palier lisse, après la trempe et/ou le revenu, est de 600 à 700 HV 2 (dureté Vickers).

6. Système de palier lisse selon l'une des revendications précédentes, **caractérisé en ce que** la dureté superficielle de l'arbre est de 2000 à 2500 HV 30.

7. Procédé pour fabriquer un système de palier lisse pour moteurs électriques miniatures comprenant un arbre en céramique et un palier lisse en un acier fritté apte à être trempé auquel on donne une forme prédéfinie et qui est fritté jusqu'à ce qu'on obtienne un volume poreux ouvert d'au moins 15 %, afin de former un palier lisse dont la surface de roulement est calibrée, après le frittage, qui est trempé grâce à un traitement de surface et dont les pores sont remplis d'huile, sous vide, le palier lisse étant finalement combiné avec l'arbre en céramique.

8. Procédé selon la revendication 6, **caractérisé en ce que** le palier lisse, après la trempe, est soumis à un revenu.
